# EUROPEAN PATENT APPLICATION

(11) **EP 4 649 799 A1**
(43) Date of publication of application: **19.11.2025**
(21) Application number: 25174860.4
(22) Date of filing: 07.05.2025
(51) Int. Cl.: A01B 73/02, A01D 43/04, A01D 78/00

(54) **WINDROW MERGER AND METHOD FOR FORMING WINDROWS THROUGH A WINDROW MERGER WHICH COLLECTS AGRICULTURAL PRODUCTS FROM A FIELD**

(30) Priority: 15.05.2024 IT 202400010948
(71) Applicant: ROC s.r.l., 47824 Poggio Torriana (RN) (IT)
(72) Inventor: UBALDI, Stefano, 47922 RIMINI (RN) (IT); UBALDI, Raffaele, 47922 RIMINI (RN) (IT)
(74) Representative: Conti, Marco

(57) **Abstract**

A windrow merger (1) for collecting agricultural products from a field in an advancing direction (AD) comprises: a front side and a rear side, wherein the front side precedes the rear side in the advancing direction (AD); a frame (2); a pick-up device (3) for picking up the agricultural products; a belt conveyor (4), connected to the frame (2) and configured to receive the agricultural products from the pick-up device and to move them in a conveying direction (C), oriented horizontally and transversal to the advancing direction (AD); a catching element connected to the frame; an actuating device, configured to move the catching element between an active position, wherein the catching element is placed lateral to the conveyor and collaborates with the conveyor for the formation of the windrow, and a passive position, wherein the catching element is placed lateral to and in proximity to the conveyor. The position of the catching element in the passive position is offset with respect to that in the active position with respect to the advancing direction and towards the head.

## Description

The present invention relates to a windrow merger and a method for forming windrows through a windrow merger which collects agricultural products from a field.

A windrow merger is an agricultural machine which collects agricultural products, such as hay, forage or biomasses or the like and forms them into a windrow for drying. Windrow mergers can be self-propelled with a motor or towed by a tractor. In general, windrow mergers can comprise a frame that supports at least one pick-up device for picking up agricultural products from a field and at least one moving device for moving the collected products, the moving device being located in proximity to the pick-up device and moving said products transversely to the latter.

However, there also exist windrow mergers without such a moving device. This machine allows agricultural products lying on the ground to be picked up and moved laterally for the purpose of placing them in a windrow. It is then possible to collect these windrows, for example, by means of a baler or a shredder. In this context, patent document US7823371 B2 provides an example of known windrow mergers. Windrow mergers can further have a guiding device for the products picked up, which is arranged at least partly above and proximal to the pick-up device. Moreover, the pick-up device is supported by arms that extend rearwardly above the moving device and the rear ends of which are articulated relative to the frame by means of substantially horizontal shafts positioned, during work, above the rear portion of the moving device and about which the arms can rotate by a certain angle.

Furthermore, the known windrow mergers include a catching element made up of a wall (or barrier or deflector) that extends vertically (in a substantially vertical plane), and during use of the windrow merger it is placed at the side of the windrow merger at a distance that can be adjusted by the user to create a space lateral to the windrow merger where the windrow is formed. The catching element intercepts the products picked up and conveyed by the conveyor and prevents the windrow from being too far from the side of the windrow merger. This aspect is particularly important for short and heavy agricultural products. It is necessary to adjust the position of the catching element (and thus the position of the windrow) closer to and away from the windrow merger according to the quantity/volume of the agricultural product/thickness of the windrow to be formed.

When the formation of windrows is not taking place, the catching element is closed up near the frame of the windrow merger. In some known windrow mergers, the catching element is folded and kept above the windrow merger in the closed position.

In this context, documents US20150282426A1, US20140196429A1 and US7574851B1 provide windrow mergers with a catching element.

However, the windrow mergers of the prior art show some drawbacks, and they can be improved. In this sector there is a need to produce windrows with greater robustness and efficiency. The aim of the present invention is to provide a windrow merger and a method for forming windrows through a windrow merger which collects agricultural products from a field, and which overcomes the abovementioned drawbacks of the prior art.

Said aim is fully achieved by the system and method of the present invention, which are characterised by what is contained in the claims set forth below.

According to one aspect of this description, the present invention provides a windrow merger.

The windrow merger is configured to collect agricultural products from a field in an advancing direction (AD).

The windrow merger comprises a front side. The front side of the windrow merger is at the front thereof. The windrow merger also has a rear side. The rear side of the windrow merger is at the rear thereof. The front side precedes the rear side in the advancing direction. The windrow merger includes a frame.

The windrow merger includes a pick-up device. The pick-up device p is configured to pick up the agricultural products. The windrow merger includes a belt conveyor. The belt conveyor is connected to the frame. The belt conveyor is configured to receive the agricultural products from the pick-up device. The belt conveyor is configured to move the agricultural products picked up in a conveying direction. The conveying direction is oriented horizontally and transversal to the advancing direction. In particular, the belt conveyor moves the agricultural products picked up in the conveying direction for forming the products into a windrow. The windrow merger includes a catching element. The catching element is connected to the frame.

The windrow merger includes an actuating device. The actuating device is configured to move the catching element between an active position and a passive position. In the active position, the catching element is placed lateral to the belt conveyor. In the active position, the catching element is distanced from the belt conveyor by a first distance therefrom to collaborate with the conveyor and to provide the space for the formation of the windrow. In the passive position, the catching element is placed lateral to and in proximity to the belt conveyor. In the passive position, the catching element is distanced from the conveyor by a second distance therefrom. The second distance is smaller than the first distance. In particular, the position of the catching element in the passive position is offset with respect to that in the active position with respect to the advancing direction and towards the head (the front side of the windrow merger). Therefore, according to one aspect of the present description, when the formation of a windrow is taking place, the catching element is distanced from the belt conveyor and is positioned in relation to the belt conveyor so as to create the necessary space for the formation of the windrow laterally to the windrow merger along the advancing direction and to receive the products that are conveyed. In particular, in this situation the catching element is positioned towards the tail of the windrow merger so that it can be facing the belt conveyor. When the formation of a windrow is no longer taking place, the catching element is moved longitudinally towards the head of the windrow merger so that it is offset with respect to the active position with respect to the advancing direction. This solution makes it possible to obtain a particularly reliable and efficient formation of the windrow, because the position of the catching element in the active position enables the catching element to effectively intercept the agricultural product and the fact that the catching element is closed in an offset position with respect to the active position and is moved forwards with respect to the advancing direction provides the function of forming a barrier, which prevents the agricultural product from going into undesirable places and prevents the tail lights and number plate of the windrow merger, which are located in the rear parts of the windrow merger, from being covered by the catching element during transport of the windrow merger (hence not during the collection of the agricultural products and the formation of the windrow) while the catching element is closed. This longitudinal movement of the catching element is particularly efficient and does not entail much complication.

In one example, in the passive position, the catching element is moved longitudinally towards the front side of the windrow merger so that the position of the catching element in the passive position is offset from that in the active position with respect to the advancing direction and shifted toward the front side of the merger.

In one example, the catching element moves between the active and the passive position in a plane including the advancing direction and the conveying direction and moves along a direction which is inclined with respect to both the advancing direction and the conveying direction.

The first and second distances refer to the positions of the catching element relative to the conveyor, measured along the conveying direction or a direction parallel to it. In one example, when the catching element is in the passive position, it is located laterally with respect to the windrow merger frame and set at a distance from the conveyor that is less its distance from the conveyor in the active position. In the passive position, the catching element is shifted toward the front side of the merger, which means it is spaced from the conveyor along the advancing direction by a greater distance than when in the active position. In contrast, in the active position, the catching element is preferably positioned adjacent to the conveyor (according to said first distance along the conveying direction) with its inner surface facing the conveyor. The catching element is preferably configured as a planar plate, offering a flat surface for interacting with conveyed agricultural products.

In one example, the actuating device includes a connecting arrangement. The connecting arrangement is configured to connect the catching element to the frame. The actuating device includes an actuator for actuating the connecting arrangement.

In one example, the actuator is a hydraulic actuator. The hydraulic actuator includes a double-acting cylinder. The double-acting cylinder includes an opening chamber. The opening chamber receives actuating oil to move the catching element to the active position. The double-acting cylinder includes a closing chamber. The closing chamber receives the actuating oil to move the catching element to the passive position.

The double-acting cylinder includes a piston. The piston separates the opening chambers and the closing chamber. The double-acting cylinder includes a rod. The rod is connected to the piston and to the connecting arrangement. The hydraulic actuator includes a hydraulic connection branch equipped with a protection valve. The protection valve (i.e. safety valve) allows circulation of actuating oil from the closing chamber to the opening chamber but not vice versa.

In one example, the protection valve defines a threshold, so that the passage of actuating oil from the closing chamber to the opening chamber is allowed only upon exceeding a preset pressure in the hydraulic connection branch.

This solution makes it possible to have a particularly reliable windrow merger.

In one example, the connecting arrangement has a first end connected to the frame and a second end connected to the catching element. The connecting arrangement also includes a central part, between the first end and the second end. The central part has a greater height with respect to the first and the second ends along a vertical axis.

This solution ensures that the connecting arrangement does not cause obstruction vertically in the zone where the windrow is formed.

In one example, the catching element has an open position in which the catching device is further away from the frame in the conveying direction with respect to the active position. In the open position, the catching element has an inclined orientation with respect to the advancing direction.

In one example, the connecting arrangement includes a displacement arm. The displacement arm is articulated to the frame at one end and to the catching element at the other end (different from the end articulated to the frame). The displacement arm is movable away from and towards the frame to move the catching element between the active and the passive position. In one example, the displacement arm includes a first arm and a second arm. The first arm is hinged to the frame. The second arm is hinged to the catching element. The first and the second arms are articulated together at an articulation point between the frame and the catching element.

In one example, the first arm has a greater length with respect to that of the second arm.

This favours the longitudinal movement of the catching element between the active and the passive position.

In one example, the first and the second arms lie in a plane which is inclined with respect to a vertical axis perpendicular to the advancing direction.

This favours the longitudinal movement of the catching element between the active and passive positions.

In one example, said plane including the first and the second arms is inclined with respect to the ground (therefore with respect to the advancing direction).

This solution makes it possible to further reduce the obstacles in the zone in which the windrow is formed.

Alternatively, the connecting arrangement includes a guiding arrangement; the guiding arrangement is connected to the frame at one end and to the catching element at the other end. The guiding arrangement extends along a trajectory between the active position and the passive position of the catching element. The guiding arrangement includes a plurality of tubes which move one inside the other to move away from or closer to the conveyor belt and to move the catching element between the active and the passive position.

In one example, the windrow merger further comprises a guiding device. The guiding device is placed upstream of the pick-up device with respect to the advancing direction. The guiding device is configured for guiding the agricultural products towards the belt conveyor. The guiding device is movable between a lowered position, proximal to the pick-up device and a raised position, distal from the pick-up device. The windrow merger further includes a support structure for movably supporting the guiding device. The support structure comprises a first arm and a second arm. Each of the first and the second arms has a first end connected to the guiding device and a second end articulated to the frame, so that the support structure is pivotable with respect to the frame around a pivoting axis parallel to the conveying direction.

In one example, the catching element is articulated to the support structure. According to one aspect of the present description, the present invention provides a method for forming windrows through a windrow merger which collects agricultural products from a field in an advancing direction. The windrow merger includes a front side and a rear side. The front side precedes the rear side in the advancing direction. The method comprises a step of picking up the agricultural products through a pick-up device. The method comprises a step of receiving the agricultural products from the pick-up device at a belt conveyor connected to a frame of the windrow merger and moving them in a conveying direction oriented horizontally and transversal to the advancing direction for forming the products into a windrow.

The method comprises a step of moving a catching element between an active position, wherein the catching element is placed lateral to the belt conveyor and distanced therefrom by a first distance to collaborate with the conveyor and to provide the space for the formation of the windrow, and a passive position, wherein the catching element is placed lateral to and in proximity to the conveyor and distanced from the conveyor by a second distance therefrom, smaller than the first distance. The position of the catching element in the passive position is offset with respect to that in the active position with respect to the advancing direction and towards the head. The method comprises a step of moving the catching element between the active position and the passive position carried out through an actuating device which includes a connecting arrangement that connects the catching element to the frame and an actuator that actuates the connecting arrangement.

In one example, the actuator is a hydraulic actuator that includes a double-acting cylinder. The double-acting cylinder includes an opening chamber, which receives actuating oil to move the catching element to the active position, and a closing chamber, which receives the actuating oil to move the catching element to the passive position. The double-acting cylinder also includes a piston dividing the opening chambers and the closing chamber, and a rod connected to the piston and the connecting arrangement.

The hydraulic actuator includes a hydraulic connection branch equipped with a protection valve to allow circulation of actuating oil from the closing chamber to the opening chamber but not vice versa.

Moreover, the protection valve defines a threshold, so that the passage of actuating oil from the closing chamber to the opening chamber is permitted only upon exceeding a preset pressure in the hydraulic connection branch. In one example, a first end of the connecting arrangement is connected to the frame and a second end of the connecting arrangement is connected to the catching element. Moreover, a central part of the connecting arrangement between the first end and the second end has a greater height with respect to the first and the second ends along a vertical axis.

In one example, the actuating device includes a connecting arrangement for connecting the catching element to the frame and an actuator for actuating the connecting arrangement. In one example, the connecting arrangement includes a displacement arm articulated to the frame at one end and to the catching element at the other end. The displacement arm is movable away from and towards the frame to move the catching element between the active and the passive position. In one example, the displacement arm includes a first arm hinged to the frame and a second arm hinged to the catching element. In one example, the first and the second arms are articulated together at an articulation point between the frame and the catching element. In one example, the first arm has a greater height with respect to the second arm.

Alternatively, the method includes a step of providing the connecting arrangement with a guiding arrangement extending along a trajectory between the active and the passive position of the catching element. The guiding arrangement is connected to the frame at one end and to the catching element at the other end. The guiding arrangement includes a plurality of tubes which move inside each other to move away from or towards belt conveyor. In one example, the method comprises a step of moving the guiding arrangement along said trajectory to move the catching element between the active and the passive position.

This and other features will emerge more clearly from the following description of a preferred embodiment, illustrated purely by way of nonlimiting example in the appended drawings, in which:

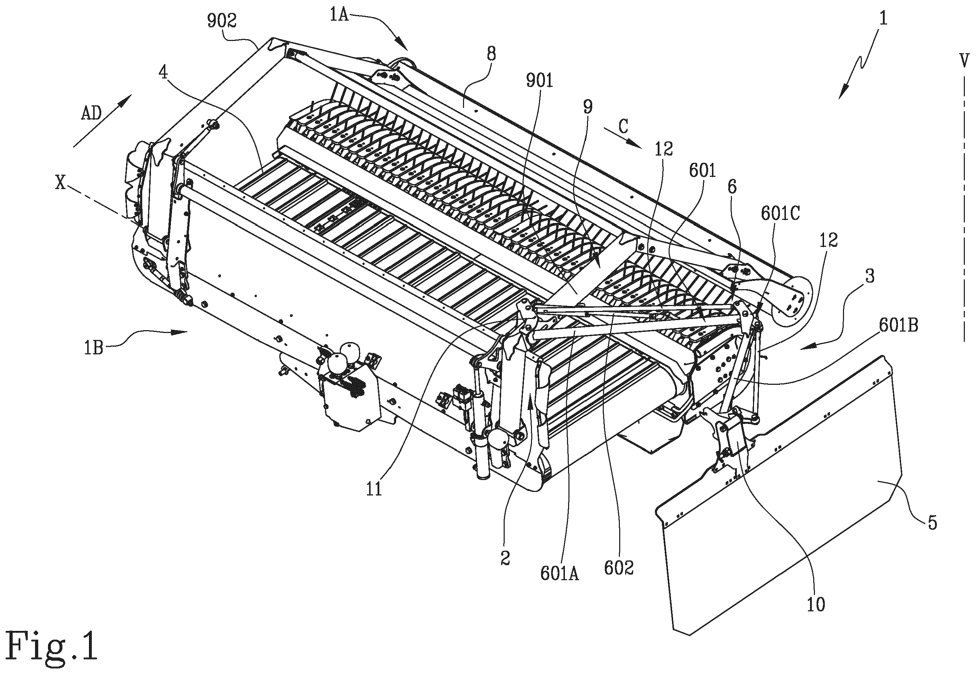

- figure 1 illustrates a windrow merger according to one or more aspects of the present description, with the catching element in the active position;

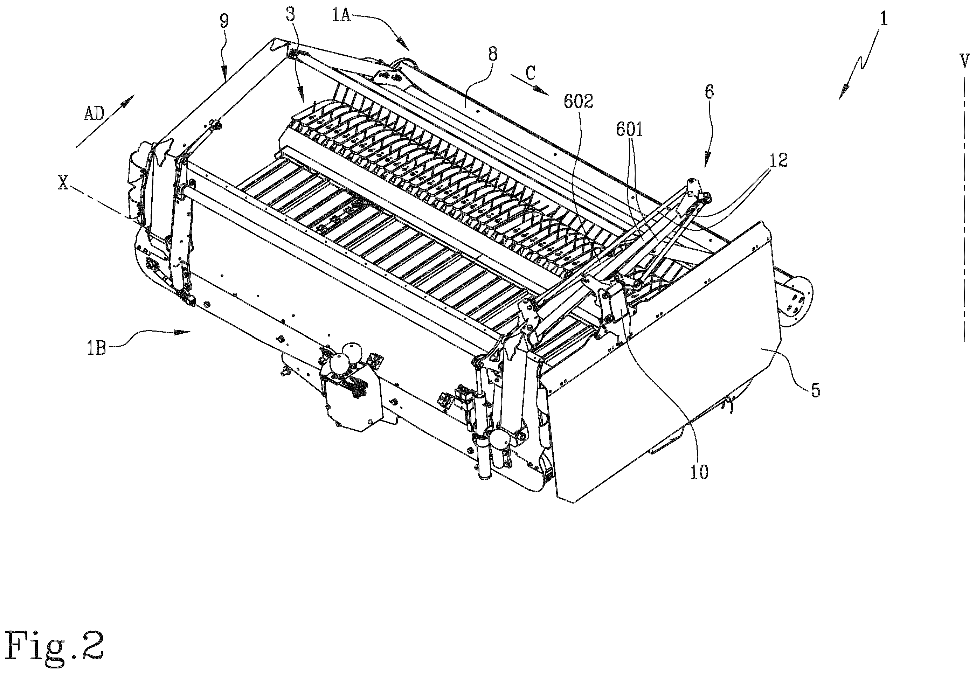

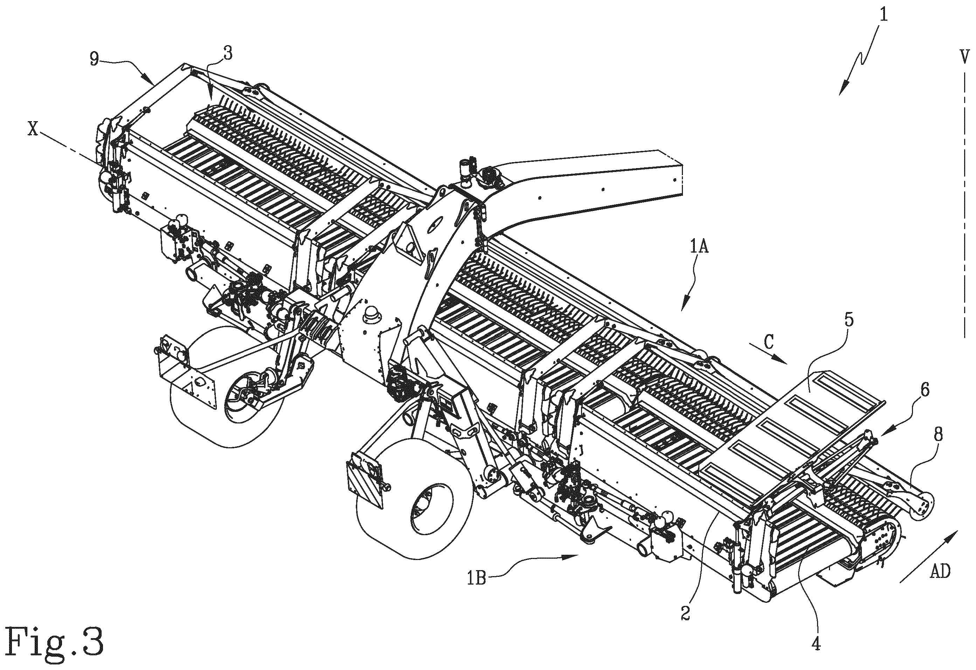

- figures 2 and 3 illustrate the windrow merger with the catching element in the passive position and folded over above the windrow merger, respectively;

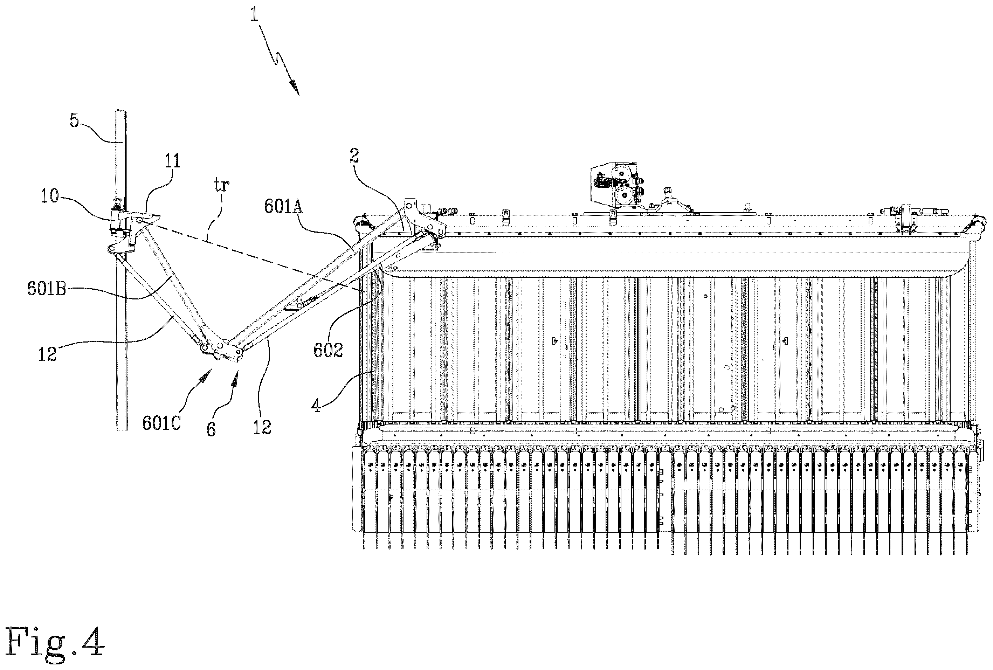

- figure 4 is a top view of the windrow merger with the catching element in the active position;
- figures 5A and 5B illustrate the windrow merger with the guiding arrangement in the active and the passive position, respectively;

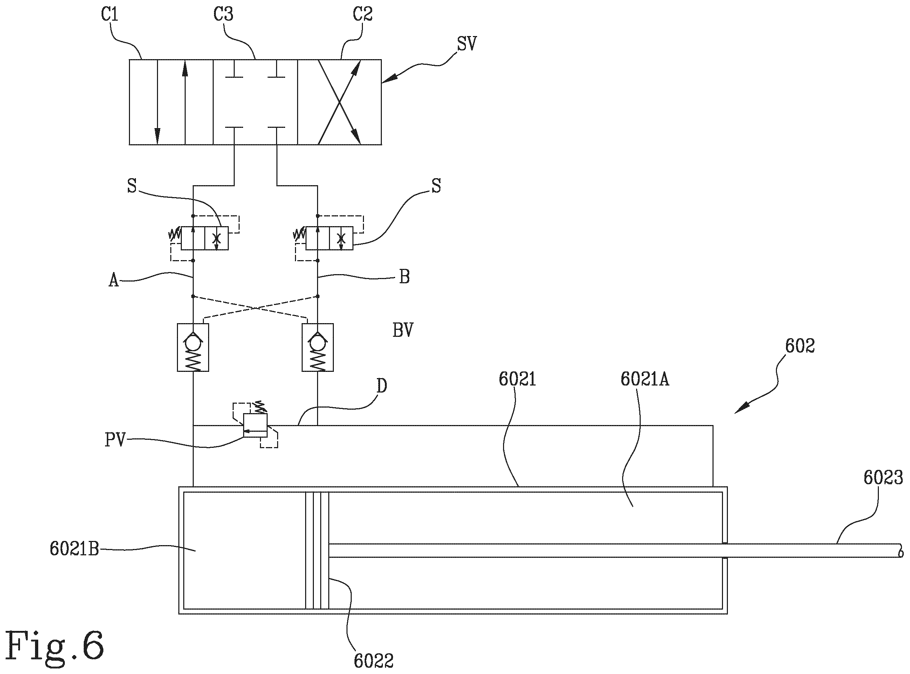

- figure 6 illustrates a hydraulic circuit for moving the catching element of the windrow merger.

With reference to the appended figures, the number 1 denotes a windrow merger. The windrow merger (or swather) is configured to collect agricultural products from a field. The windrow merger 1 moves in an advancing direction AD. The windrow merger can include wheels. In one example, the windrow merger 1 is towed by another agricultural machine, for example a tractor, along the advancing direction AD.

The windrow merger 1 also includes a pick-up device 3. The pick-up device 3 picks up the agricultural products. The pick-up device 3 can be a roller that rotates about an axis, in a direction opposite the direction of rotation of the wheels of the windrow merger when it is advancing along said advancing direction. The windrow merger 1 also includes a conveyor 4. The conveyor 4 is connected to the frame 2. The conveyor receives the agricultural products from the pick-up device and moves them in a conveying direction C. The conveying direction C is oriented horizontally and transversal to the advancing direction AD. Preferably, the conveyor is a belt conveyor 4. The windrow merger can comprise one or more belt conveyors, each of which moves in the conveying direction C.

The windrow merger 1 includes a guiding device 8. The guiding device is placed upstream of the pick-up device 3 with respect to the advancing direction AD. In particular, the guiding device 8 guides the agricultural products towards the belt conveyor 4. The guiding device 8 is movable between a lowered position, proximal to the pick-up device 3, and a raised position, distal from the pick-up device 3. In one example, the guiding device 8 is made of aluminium. In one example, the guiding device 8 is in the form of a roller. In one example, the windrow merger 1 includes a support structure 9, which movably supports the guiding device 8. The support structure comprises a first arm 901 and a second arm 902. Each arm has a first end, connected to the guiding device 8, and a second end, articulated to the frame 2. The support structure is pivotable with respect to the frame 2 around a pivoting axis X. The pivoting axis X is parallel to the conveying direction C. The pivoting axis X is upstream of the guiding device with respect to the advancing direction AD. The pivoting axis X is at a lower height than the guiding device 8 in the lowered position.

The windrow merger 1 has a rear side (tail) 1B and a front side (head) 1A, wherein the front side precedes the rear side in the advancing direction AD. The windrow merger 1 includes a catching element 5 connected to the frame. In one example, the catching element 5 is connected to the support structure 9 and in particular to an arm between the first and the second arms 901, 902. In other examples, the windrow merger can have two catching elements, each connected to an arm between the first and the second arms of the support structure 9. The catching element can be a sheet (a wall that extends vertically) made of PVC or the like stiffened by some harmonic steel bands arranged vertically. The catching element is connected to the frame by means of a fixing bracket 11. The catching element has the shape of a plate and has the function of collaborating with the belt conveyor to form the windrow.

The windrow merger includes an actuating device 6 which moves the catching element between an active position and a passive position. In the active position, the catching element is distanced from the belt conveyor and facing the belt conveyor, so that the catching element and the belt conveyor collaborate to form a windrow from the agricultural products picked up by the pick-up device 3. The catching element, in the active position, extends along a vertical axis V and is placed lateral to the belt conveyor. Moreover, in the active position, the catching element is moved towards the tail of the windrow merger and is distanced from the belt conveyor according to a first distance in order to collaborate with the conveyor and to provide the space for the formation of the windrow. The first distance can be adjusted by means of the operator. In the passive position, the catching element 5 is placed lateral to and in proximity to the conveyor. Therefore, the distance between the catching element and the belt is smaller in the passive position than in the active position. The position of the catching element in the passive position is offset with respect to that in the active position with respect to the advancing direction and towards the head. Therefore, the movement of the catching element between the active position and the passive position is not only a longitudinal movement, but also includes a movement along a rectilinear trajectory tr which is oblique with respect to the advancing direction AD.

The catching element is designed to assist in the formation of a lateral windrow by intercepting and guiding the crop material discharged by the merger's conveyor/s. The catching element is movably mounted with respect to the main frame of the merger and is configured to transition between the at least two defined positions: the active position and the passive position. In the active position, the catching element is deployed laterally with respect to the merger body, i.e., it is extended outwardly from the side of the machine. More specifically, the catching element is positioned rearwardly and laterally relative to the merger frame, such that it is aligned with the outlet region of the lateral conveyors. This position allows the catching element to effectively collaborate with the conveyor belts, which move the crop material laterally. As the conveyor discharges the material, the catching element intercepts and redirects the material, ensuring it forms a well-defined lateral windrow that is substantially parallel to the advancing direction of the merger. When the windrower merger is not in operation or when the catcher is not needed (e.g., during transport or non-merging tasks), the catching element is retracted or repositioned into the passive configuration. In this configuration, the catching element is moved **forwardly** toward the head (front) of the merger, closer to the merger frame, and is offset with respect to its active position with respect to the advancing direction, such that the catching element no longer extends rearward or outward, and instead assumes a compact, forward-shifted posture. The actuating device includes a connecting arrangement 601 that connects the catching element to the frame and an actuator 602 that actuates the connecting arrangement and thus moves the catching element between the active position and the passive position. Preferably, the connecting arrangement is an arm. The arm includes a first arm 601A hinged to the frame and a second arm 601B hinged to the catching element. The first and the second arms are articulated together at an articulation point 601C between the frame and the catching element. The articulation point 601C of the arm has a greater height with respect to the ends of the first and the second arms where the first and the second arms are articulated to the frame and to the catching element, respectively. The first arm has a greater length with respect to that of the second arm. The first and the second arms lie in a plane which is inclined with respect to a vertical axis perpendicular to the advancing direction. The plane is inclined with respect to the ground. The articulation point of the arm has a convexity facing in the advancing direction AD. If the windrow merger does not comprise the support structure, the catching element can be connected to another point of the frame by means of the connecting arrangement (for example the arm).

The arm is movable away from and towards the frame and along said trajectory tr to move the catching element between the active and the passive position.

Moreover, there are also provided two counter-arms 12, which maintain the correct inclination of the catching element 5 and constrain motion to the rectilinear trajectory tr. In one example, the first counter-arm 12 is articulated to the fixing bracket at one end, and is angularly distanced from the end of the first arm where the first arm is articulated to the frame, and is articulated to a second end of the second arm, opposite the end at which the second arm is articulated to the catching element, at the other end.

Moreover, the second counter-arm 12 is articulated to the catching element at one end, and is angularly distanced from the end of the second arm where the second arm is articulated to the catching element 5, and is articulated to a second end of the first arm, opposite the end at which the first arm is articulated to the frame, at the other end.

The actuator is preferably a hydraulic actuator and includes a double-acting cylinder 6021. The double-acting cylinder 6021 has an opening chamber 6021B, which receives actuating oil to move the catching element to the active position, and a closing chamber 6021A, which receives the actuating oil to move the catching element to the passive position. The double-acting cylinder 6021 includes a piston 6022 which divides the opening chambers and the closing chamber and is movable along the cylinder 6021. The cylinder 6021 includes a rod 6023 attached to the piston on one side and to the connecting arrangement (the first arm if the arm is provided as a connecting arrangement). In particular, the cylinder 6021 is connected to the hydraulic distributor of the tractor. There is provided a switching valve SV which has three configurations. In the first configuration C1, branch A, which belongs to the actuator, is pressurised and branch B is depressurised; therefore, actuating oil is fed to the opening chamber 6021B and the rod is extended; consequently, the arm (and thus the catching element) is moved towards the active position.

In the second configuration C2, branch B, which belongs to the actuator, is pressurised and branch A is depressurised; therefore, actuating oil is fed to the closing chamber 6021A and the rod is retracted; consequently, the arm (and thus the catching element) is moved towards the passive position. In the third configuration C3, there is no pressure in either of branches A and B, and there is no hydraulic communication between the cylinder and the hydraulic distributor of the tractor. Therefore, in configuration C3, the position of the rod is blocked. The actuator also includes two nonreturn valves (check valve) BV, upstream of the cylinder, which prevent oil leakages, maintaining the position of the cylinder fixed in the third configuration.

Moreover, the actuator includes two throttles S between the switching valve SV and the check valves BV which limit the flow of actuating oil to control the speed of movement of the rod and thus the arm. In both configurations C1 and C2, the flow is controlled by V1, to limit the speed of movement of the rod. Moreover, it is envisaged to measure the pressure in the closing chamber, and if that pressure exceeds a predetermined threshold, a protection valve PV located between the check valve BV and the cylinder will be opened and the actuating oil will pass through branch D from the closing chamber to the opening chamber and thus enable the extension of the rod.

Therefore, if the cylinder is forced to extend or if the catching element encounters an obstacle during closing, the increase in pressure in the cylinder will cause the opening of the protection valve PV, thereby allowing flow through branch D, which enables the outflow of actuating oil into the chamber opposite the one under pressure and thus the extraction of the rod. In particular, the actuator includes the hydraulic connection branch D, which is equipped with a protection valve PV to allow circulation of actuating oil from the closing chamber 6021A to the opening chamber 6021B but not vice versa. The actuator provides a threshold effect, so that, in a movement of the catching element from the active position it yields with respect to the frame and in the conveying direction in response to a force exerted on the catching element which exceeds a certain threshold.

In particular, the protection valve PV defines a threshold, so that the passage of actuating oil from the closing chamber 6021A to the opening chamber 6021B is allowed only upon exceeding a preset pressure in the hydraulic connection branch D.

In particular, in response to an external force applied to the catching element 5 to push it towards the active position, the piston moves; if that external force generates a pressure in the hydraulic connection branch D, i.e. in the closing chamber 6021A, which is greater than the preset threshold, the protection valve PV will open to allow circulation of actuating oil from the closing chamber to the opening chamber.

Therefore, the catching element will yield from the passive position (the one near the belt) to the active one (distant from the belt) if the external force exceeds a certain threshold.

This serves as a safety feature, for example, to prevent damage to the windrow merger should the operator unload material in the direction of the catching element without having first placed it in the active condition.

In response to a closing command given to the actuator, if the pressure exceeds a preset value (the threshold value) in the closing chamber 6021A, the actuating oil can circulate from the closing chamber 6021A to the opening one through branch D with a consequent halt in the movement of the catching element to protect the apparatus (including the connecting arrangement). Therefore, in this case, the protection valve provides a safety function (friction) during the closing of the catching element (for example when during closing there is an obstacle in front of the movement of the catching element).

Moreover, since the catching element (in the active position thereof (not completely open, thus when it has not reached the travel limit) and the passive one) could impact against a rigid obstacle present on the ground, for example a rock, or an already formed windrow, this impact of the catching element against an obstacle could seriously damage the latter and the connecting arrangement. The presence of the protection valve PV makes it possible to protect the catching element in the event of an impact. The catching element has an open position in which the catching element is further away from the frame in the conveying direction C with respect to the active position. Preferably, when the catching element is in the active position, the catching element is positioned along the vertical axis V and in the open position the catching element has an inclined orientation with respect to the vertical axis.

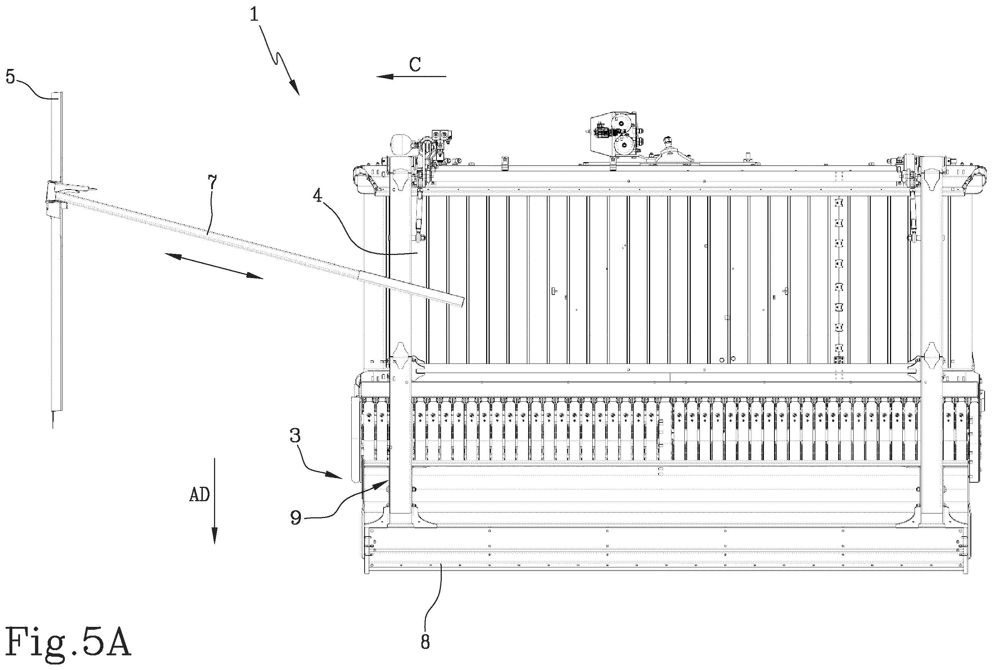

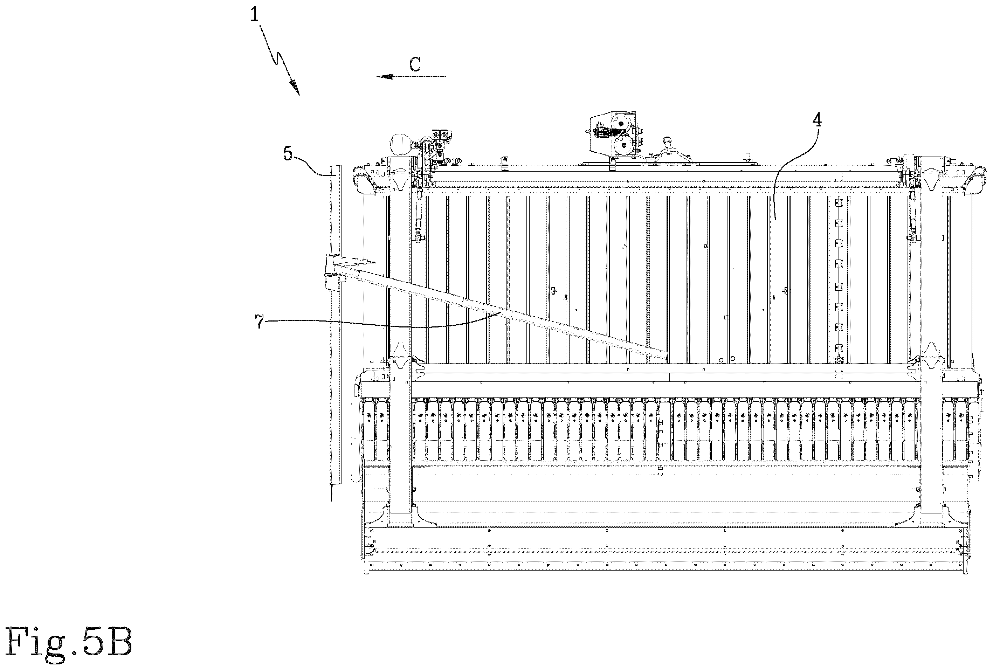

Alternatively, a guiding arrangement 7 can be provided in place of the arm to move the catching element between the active and the passive position. In this case, a guiding arrangement 7 having a plurality of tubes which move one inside the other to move away from or closer to the conveyor belt is used to move the catching element between the active and the passive position along said rectilinear trajectory tr. Therefore, in this case the guiding arrangement does not extend along the conveying direction but is rather inclined with respect to that direction in order to move the catching element between the active and passive positions. Figure 5A illustrates the direction of movement of the guiding arrangement 7. The guiding arrangement can also be inclined with respect to the ground. The actuator moves the guiding arrangement, which is extended in length through the movement of the tubes and thus moves the catching element. It should be noted that this aspect is defined as an alternative to the arm, and it may be combined with one or more aspects of the present description which do not require the presence of the arm.

In one example, it can be envisaged that the catching element in the passive position is folded over by means of a folding element 10 placed on the catching element, so that the catching element is distanced from the frame 2 along the vertical axis and is horizontally extended parallel to the conveying direction.

## Claims

1. A windrow merger (1) for collecting agricultural products from a field in an advancing direction (AD), comprising:
- a front side and a rear side, wherein the front side precedes the rear side in the advancing direction (AD);
- a frame (2);
- a pick-up device (3) for picking up the agricultural products;
- a belt conveyor (4), connected to the frame (2) and configured to receive the agricultural products from the pickup device and to move them in a conveying direction (C), oriented horizontally and transversal to the advancing direction (AD) for forming the products into a windrow;
- a catching element (5) connected to the frame (2);
- an actuating device (6), configured to move the catching element between an active position, wherein the catching element is placed lateral to the conveyor and distanced therefrom by a first distance to collaborate with the conveyor and to provide the space for the formation of the windrow, and a passive position, wherein the catching element is placed lateral to and in proximity to the conveyor and distanced from the conveyor by a second distance therefrom, smaller than the first distance, wherein the position of the catching element in the passive position is offset with respect to that in the active position with respect to the advancing direction and towards the head.

2. The windrow merger (1) according to claim 1, wherein the actuating device includes a connecting arrangement (601) for connecting the catching element to the frame and an actuator (602) for actuating the connecting arrangement, wherein the actuator is a hydraulic actuator that includes a double-acting cylinder (6021) having an opening chamber (6021B), which receives actuating oil to move the catching element to the active position, a closing chamber (6021A), which receives the actuating oil to move the catching element to the passive position, a piston (6022) that separates the opening chambers and the closing chamber, a rod (6023) connected to the piston and to the connecting arrangement, a hydraulic connection branch (D) equipped with a protection valve (PV) to allow circulation of actuating oil from the closing chamber (6021A) to the opening chamber (6021B) but not vice versa.

3. The windrow merger (1) according to claim 2, wherein the protection valve (PV) defines a threshold, so that the passage of the actuating oil from the closing chamber (6021A) to the opening chamber (6021B) is allowed only upon exceeding a preset pressure in the hydraulic connection branch (D).

4. The window merger (1) according to any of the previous claims, wherein the connecting arrangement (601) has a first end connected to the frame and a second end connected to the catching element, and a central part between the first end and the second end, wherein the central part has a greater height with respect to the first and the second ends along a vertical axis.

5. The window merger (1) according to any of the previous claims, wherein the catching element has an open position in which the catching element is further away from the frame in the conveying direction with respect to the active position, and wherein in the open position the catching element has an inclined orientation with respect to the vertical axis.

6. The windrow merger (1) according to any of the previous claims, wherein the actuating device includes a connecting arrangement for connecting the catching element to the frame and an actuator for actuating the connecting arrangement, wherein the connecting arrangement includes a displacement arm articulated to the frame at one end and to the catching element at the other end, and movable away from and towards the frame to move the catching element between the active and the passive position, wherein the displacement arm includes a first arm (601A) hinged to the frame and a second arm (601B) hinged to the catching element, wherein the first and the second arms are articulated together at an articulation point (601C) between the frame and the catching element.

7. The windrow merger (1) according to claim 6, wherein either of the following conditions is verified:
(i) the first arm has a greater length with respect to that of the second arm.
(ii) the first and the second arms lie in a plane which is inclined with respect to a vertical axis perpendicular to the advancing direction.

8. The windrow merger (1) according to claim 7, wherein the plane is inclined with respect to the ground.

9. The windrow merger (1) according to any of the previous claims from 1 to 5, wherein the actuating device includes a connecting arrangement for connecting the catching element to the frame and an actuator for actuating the connecting arrangement, the connecting arrangement includes a guiding arrangement (7) connected to the frame at one end and to the catching element at the other end, the guiding arrangement extends along a trajectory between the active position and the passive position of the catching element and includes a plurality of tubes which move one inside the other to move away from or closer to the conveyor belt and to move the catching element between the active and passive positions.

10. The windrow merger (1) according to any of the previous claims, further comprising:
- a guiding device (8), placed upstream of the pick-up device (3) with respect to the advancing direction and configured for guiding the agricultural products towards the conveyor (4), wherein the guiding device (8) is movable between a lowered position, proximal to the pick-up device (3), and a raised position, distal from the pick-up device;
- a support structure (9), for movably supporting the guiding device (8), the support structure including a first arm (901) and a second arm (902), each having a first end connected to the guiding device (8) and a second end articulated to the frame (2), so that the support structure (9) is pivotable with respect to the frame (2) around a pivoting axis (X) parallel to the conveying direction (C);
wherein the catching element is articulated to the support structure.

11. A method for forming windrows through a windrow merger (1) which collects agricultural products from a field in an advancing direction (AD), wherein the windrow merger includes a front side (1A) and a rear side (1B), wherein the front side precedes the rear side in the advancing direction (AD); the method comprising the following steps:
- picking up the agricultural products through a pick-up device (3);
- receiving the agricultural products from the pickup device at a belt conveyor (4) connected to a frame of the windrow merger and moving them in a conveying direction (C), oriented horizontally and transversal to the advancing direction (AD) for forming the products into a windrow
- moving a catching element (5) between an active position, wherein the catching element is placed lateral to the conveyor and distanced therefrom by a first distance to collaborate with the conveyor and to provide the space for the formation of the windrow, and a passive position, wherein the catching element is placed lateral to and in proximity to the conveyor and distanced from the conveyor by a second distance therefrom, smaller than the first distance, wherein the position of the catching element in the passive position is offset with respect to that in the active position with respect to the advancing direction and towards the head.

12. The method according to claim 11, comprising a step of moving the catching element between the active position and the passive position carried out through an actuating device (6) which includes a connecting arrangement (601) that connects the catching element to the frame and an actuator (602) that actuates the connecting arrangement, wherein the actuator is a hydraulic actuator that includes a double-acting cylinder (6021) having an opening chamber (6021B), which receives actuating oil to move the catching element to the active position, a closing chamber (6021A), which receives actuating oil to move the catching element to the passive position, a piston (6022) dividing the opening chambers and the closing chamber, a rod (6023) connected to the piston and the connecting device, a hydraulic connection branch (D) equipped with a protection valve (PV) to allow circulation of oil from the closing chamber (6021A) to the opening chamber (6021B) but not vice versa, wherein the protection valve (PV) defines a threshold, so that the passage of oil from the closing chamber (6021A) to the opening chamber (6021B) is permitted only upon exceeding a preset pressure in the hydraulic connection branch (D).

13. The method according to any of the previous claims from 11 to 12, wherein a first end of the connecting arrangement is connected to the frame and a second end of the connecting arrangement is connected to the catching element, and a central part of the connecting arrangement between the first end and the second end has a greater height with respect to the first and the second ends along a vertical axis (V).

14. The method according to any of the previous claims from 11 to 13, wherein the actuating device includes a connecting arrangement (601) for connecting the catching element to the frame and an actuator (602) for actuating the connecting arrangement, wherein the connecting arrangement includes a displacement arm articulated to the frame at one end and to the catching element at the other end, and movable away from and towards the frame to move the catching element between the active and the passive position, wherein the displacement arm includes a first arm (601A) hinged to the frame and a second arm (601B) hinged to the catching element, wherein the first and the second arms are articulated together at an articulation point (601C) between the frame and the catching element, wherein the first arm has a greater height than the second arm.

15. The method according to any of the previous claims, from 11 to 14, wherein the actuating device is provided with a connecting arrangement (601) that connects the catching element to the frame and an actuator (602) that actuates the connecting arrangement, wherein the method includes a step of providing the connecting arrangement with a guiding arrangement (7) extending along a trajectory between the active and the passive position of the catching element, the guiding arrangement is connected to the frame at one end and to the catching element at the other end, the guiding arrangement includes a plurality of tubes which move inside each other to move away from or towards the conveyor belt, the method comprising a step of moving the guiding arrangement along said trajectory to move the catching element between the active and the passive position.
